# EUROPEAN PATENT APPLICATION

(11) **EP 3 089 504 A1**
(43) Date of publication of application: **02.11.2016**
(21) Application number: 14874541.7
(22) Date of filing: 16.06.2014
(51) Int. Cl.: H04W 24/04

(54) **METHOD AND DEVICE FOR SENDING AND RECEIVING RADIO PARAMETER**

(30) Priority: 27.12.2013 CN 201310740325
(71) Applicant: ZTE Corporation, Shenzhen city, Guangdong 518057 (CN)
(72) Inventor: PENG, Yongchao, Shenzhen Guangdong 518057 (CN); LIU, Xinying, Shenzhen Guangdong 518057 (CN); TANG, Ke, Shenzhen Guangdong 518057 (CN)
(74) Representative: Brunazzi, Stefano
(86) International application number: PCT/CN2014/079992
(87) International publication number: WO 2015/096410

(57) **Abstract**

Provided are methods and devices for sending or receiving a wireless parameter. The sending method includes that: a wireless configuration parameter is coded into a digital sequence, wherein the wireless configuration parameter is used for configuring a wireless parameter of a receiving party which receives the wireless configuration parameter; and data messages corresponding to the digital sequence are sent, wherein length sequences of the data messages correspond to the digital sequence. By the technical solution, the problems of additional hardware requirement and low security of sending and receiving of the wireless configuration parameter in a WLAN are solved, hardware cost is reduced, and sending and receiving security is improved.

## Description

### Technical Field

The present disclosure relates to the field of communication, and in particular to methods and devices for sending or receiving a wireless parameter.

### Background

At present, along with popularization of a Wireless Local Area Network (WLAN) technology, equipment such as a wireless camera, an intelligent socket and an intelligent home appliance, in addition to equipment with a user interaction interface such as a computer and a mobile phone, starts supporting WLAN. However, such type of equipment generally is not equipped with a user interaction interface, which is inconvenient for a user to input configuration parameters such as a name, password and the like of the WLAN, while these parameters are required for connection to an Access Point (AP) in the WLAN.

In a related technology, for terminal equipment without a user interaction interface, a wireless configuration parameter may be transmitted in a key or Near Field Communication (NFC) manner described in a Wireless-Fidelity (Wi-Fi) Protected Setup (WPS) specification. In these methods, the key manner has the lowest requirement that the equipment has a physical or virtual WPS key on the terminal equipment, but such a method has a certain security risk. Manners of NFC, Radio Frequency Identification (RFID) and the like require corresponding hardware support on a terminal and an AP, which may increase hardware cost. By these methods, a wireless configuration parameter can be transmitted to only one piece of equipment at one time, and if there exist multiple pieces of equipment, operation is required to be repeated for many times, which will consume more time and labor.

For the problems of additional hardware requirement and low security of sending and receiving of a wireless configuration parameter in a WLAN in the related technology, there is yet no effective solution.

### Summary

The embodiments of the present disclosure provide methods and devices for sending or receiving a wireless parameter, so as to at least solve the problems of additional hardware requirement and low security of sending and receiving of a wireless configuration parameter in a WLAN.

According to one aspect of the embodiments of the present disclosure, a method for sending a wireless parameter is provided, which may include that: a wireless configuration parameter is coded into a digital sequence, wherein the wireless configuration parameter is used for configuring a wireless parameter of a receiving party which receives the wireless configuration parameter; and data messages corresponding to the digital sequence are sent, wherein length sequences of the data messages correspond to the digital sequence.

The step that the wireless configuration parameter is coded into the digital sequence may include that: the wireless configuration parameter is encapsulated into a preset format; data obtained by encapsulation is split into multiple fragments; and a fragment Identifier (ID) is added in front of each fragment, wherein the multiple fragments is combined into the digital sequence.

The preset format may include: a Type Length Value (TLV) format.

The step that the fragment ID is added in front of each fragment to form the digital sequence may include that: at least two digits are added in front of each fragment as the fragment ID to form the digital sequence, wherein a first digit in the at least two digits is used for identifying an initial position of the fragment, and a second digit in the at least two digits is used for identifying a position of the fragment in the wireless configuration parameter.

The step that the wireless configuration parameter is coded into the digital sequence may include that: the wireless configuration parameter is encrypted; and the encrypted wireless configuration parameter is coded.

The step that the wireless configuration parameter is encrypted may include that: the wireless configuration parameter is encrypted by virtue of a key already known to the receiving party; the step that the data messages corresponding to the digital sequence are sent may include that: the data messages are sent to the receiving party; and/or, the step that the wireless configuration parameter is encrypted may include that: the wireless configuration parameter is encrypted by virtue of a key generated by a sending party of the wireless configuration parameter; and the step that the data messages corresponding to the digital sequence are sent may include that: the data messages are sent to the receiving party, and the key generated by the sending party is sent to the receiving party in an asymmetric encryption manner.

The step that the data messages corresponding to the digital sequence are sent may include that: the data messages are periodically sent in a wireless broadcast manner or a wireless multicast manner.

According to another aspect of the embodiments of the present disclosure, a method for receiving a wireless parameter is further provided, which may include that: data messages are received, and length sequences of the data messages are acquired, wherein the length sequences correspond to a digital sequence obtained by coding a wireless configuration parameter; and the length sequences are decoded to obtain the wireless configuration parameter, and configuration is performed according to the wireless configuration parameter.

The step that the length sequences of the data messages are acquired may include that: multiple fragments are obtained from the received data messages, and the multiple fragments are combined to obtain the digital sequence according to a fragment ID of each fragment in the multiple fragments.

The fragment ID of each fragment may include at least two digits, wherein a first digit in the at least two digits is used for identifying an initial position of the fragment, and a second digit in the at least two digits is used for identifying a position of the fragment in the wireless configuration parameter.

The step that the coded wireless configuration parameter is decoded to obtain the wireless configuration parameter may include that: the coded wireless configuration parameter is decoded to obtain an encrypted wireless configuration parameter; and the encrypted wireless configuration parameter is decrypted to obtain the wireless configuration parameter.

The step that the encrypted wireless configuration parameter is decrypted may include that: the encrypted wireless configuration parameter is decrypted by virtue of an already known key; and/or, the step that the encrypted wireless configuration parameter is decrypted may include that: a key generated by a sending party of the wireless configuration parameter is received, wherein the key may be sent in an asymmetric encryption manner; and the encrypted wireless configuration parameter is decrypted by virtue of the key generated by the sending party.

According to another aspect of the embodiments of the present disclosure, a device for sending a wireless parameter is further provided, which may include: a coding component, configured to code a wireless configuration parameter into a digital sequence, wherein the wireless configuration parameter is used for configuring a wireless parameter of a receiving party which receives the wireless configuration parameter; and a sending component, configured to send data messages corresponding to the digital sequence, wherein length sequences of the data messages correspond to the digital sequence.

The coding component may be configured to encapsulate the wireless configuration parameter into a preset format, split data obtained by encapsulation into multiple fragments and add a fragment ID in front of each fragment, wherein the multiple fragments is combined into the digital sequence.

The preset format may include: a TLV format.

The coding component may be configured to add the fragment ID in front of each fragment in the following manner to form the digital sequence: at least two digits are added in front of each fragment as the fragment ID to form the digital sequence, wherein a first digit in the at least two digits is used for identifying an initial position of the fragment, and a second digit in the at least two digits is used for identifying a position of the fragment in the wireless configuration parameter.

The device may further include: an encrypting component, configured to encrypt the wireless configuration parameter, and the coding component may be configured to code the encrypted wireless configuration parameter.

The encrypting component may be configured to encrypt the wireless configuration parameter by virtue of a key already known to the receiving party; the sending component may be configured to send the data messages to the receiving party; the encrypting component may be configured to encrypt the wireless configuration parameter by virtue of a key generated by a sending party of the wireless configuration parameter; and the sending component may be configured to send the data messages to the receiving party and send the key generated by the sending party to the receiving party in an asymmetric encryption manner.

The sending component may be configured to periodically send the data messages in a wireless broadcast manner or a wireless multicast manner.

According to another aspect of the embodiments of the present disclosure, a device for receiving a wireless parameter is further provided, which may include: a receiving component, configured to receive data messages; and a decoding component, configured to acquire length sequences of the data messages, the length sequences corresponding to a digital sequence obtained by coding a wireless configuration parameter, decode the length sequences to obtain the wireless configuration parameter and perform configuration according to the wireless configuration parameter.

The decoding component may be configured to obtain multiple fragments from the received data messages and combine the multiple fragments to obtain the digital sequence according to a fragment ID of each fragment in the multiple fragments.

The fragment ID of each fragment may include at least two digits, wherein a first digit in the at least two digits is used for identifying an initial position of the fragment, and a second digit in the at least two digits is used for identifying a position of the fragment in the wireless configuration parameter.

The device may further include: a decrypting component, configured to decrypt the encrypted wireless configuration parameter to obtain the wireless configuration parameter, and the decoding component may be configured to decode the coded wireless configuration parameter to obtain the encrypted wireless configuration parameter.

The decrypting component may be configured to decrypt the encrypted wireless configuration parameter by virtue of an already known key; the receiving component may be configured to receive a key generated by a sending party of the wireless configuration parameter, wherein the key may be sent in an asymmetric encryption manner; and the decrypting component may be configured to decrypt the encrypted wireless configuration parameter by virtue of the key generated by the sending party.

According to the embodiments of the present disclosure, a wireless configuration parameter is coded into the digital sequence, wherein the wireless configuration parameter is used for configuring a wireless parameter of the receiving party which receives the wireless configuration parameter, and data messages corresponding to the digital sequence are sent, wherein length sequences of the data messages correspond to the digital sequence, so that the problems of additional hardware requirement and low security of sending and receiving of the wireless configuration parameter in the WLAN are solved, hardware cost is reduced, and sending and receiving security is improved.

### Brief Description of the Drawings

The drawings described here are adopted to provide further understanding of the present disclosure, and form a part of the present disclosure. Schematic embodiments of the present disclosure and description thereof are adopted to explain the present disclosure and not intended to form improper limits to the present disclosure. In the drawings:
Fig. 1 is a flowchart of a method for sending a wireless parameter according to an embodiment of the present disclosure;
Fig. 2 is a flowchart of a method for receiving a wireless parameter according to an embodiment of the present disclosure;
Fig. 3 is a first structure diagram of a device for sending a wireless parameter according to an embodiment of the present disclosure;
Fig. 4 is a second structure diagram of a device for sending a wireless parameter according to an embodiment of the present disclosure;
Fig. 5 is a first structure diagram of a device for receiving a wireless parameter according to an embodiment of the present disclosure;
Fig. 6 is a second structure diagram of a device for receiving a wireless parameter according to an embodiment of the present disclosure;
Fig. 7 is a structure diagram of a device for configuring a WLAN terminal according to exemplary embodiment 1;
Fig. 8 is a flowchart of configuring a WLAN terminal according to exemplary embodiment 2;
Fig. 9 is a diagram of a coding algorithm according to exemplary embodiment 2;
Fig. 10 is a flowchart of a decoding algorithm according to exemplary embodiment 2;
Fig. 11 is a diagram of encryption in the decoding algorithm according to exemplary embodiment 3;
Fig. 12 is a diagram of encryption in the decoding algorithm according to exemplary embodiment 4; and
Fig. 13 is a flowchart of configuration of a wireless parameter of an AP according to exemplary embodiment 5.

### Detailed Description of the Embodiments

It is important to note that embodiments in the present disclosure and characteristics in the embodiments may be combined under the condition of no conflicts. The present disclosure will be described below with reference to the drawings and the embodiments in detail.

In the following embodiments, a terminal may be a mobile terminal (for example, a mobile phone and a tablet), and may also be a terminal of another type. An operating system running on the terminal may also be various types of systems, for example, an android system which is widely used at present, or a Windows operating system and an iOS system, and is not limited to these systems.

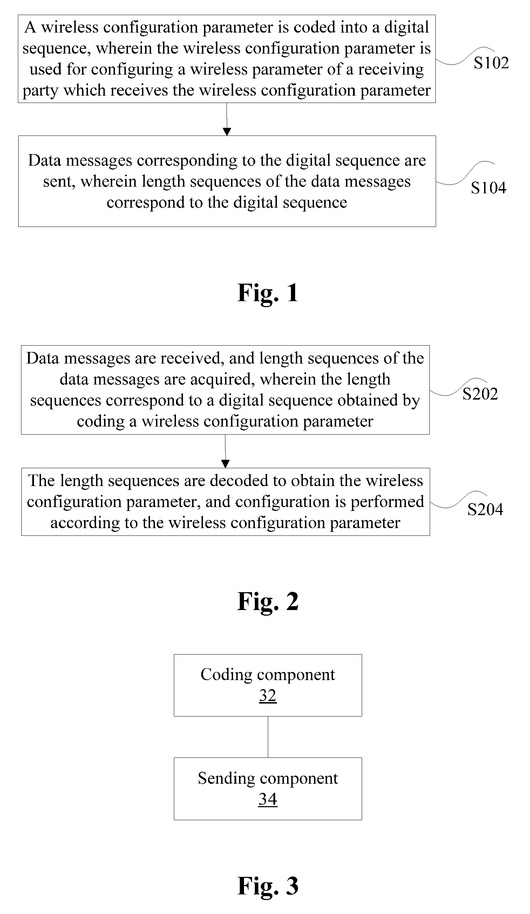

In the embodiment, a method for sending a wireless parameter is provided. Fig. 1 is a flowchart of a method for sending a wireless parameter according to an embodiment of the present disclosure, and as shown in Fig. 1, the flow includes the following steps:
Step S102: a wireless configuration parameter is coded into a digital sequence, wherein the wireless configuration parameter is used for configuring a wireless parameter of a receiving party which receives the wireless configuration parameter; and
Step S104: data messages corresponding to the digital sequence are sent, wherein length sequences of the data messages correspond to the digital sequence.

By the steps, the wireless configuration parameter to be sent is coded into the digital sequence, and then the data messages corresponding to the digital sequence are sent, wherein the length sequences of the data messages correspond to the digital sequence, so that the receiving party does not need additional hardware to input the wireless configuration parameter. In addition, the wireless configuration parameter is coded into the digital sequence, so that sending security is improved. By virtue of the above technical solution, the problems of additional hardware requirement and low security of sending and receiving of the wireless configuration parameter in a WLAN are solved, hardware cost is reduced, and sending and receiving security is improved.

In the embodiment, the step that the wireless configuration parameter is coded into the digital sequence may include that: the wireless configuration parameter is encapsulated into a preset format, wherein the preset format may be formed by multiple parameters; and data obtained by encapsulation is split into multiple fragments, and a fragment ID is added in front of each fragment, wherein the multiple fragments in combination form the digital sequence.

In the embodiment, the preset format into which the wireless configuration parameter is encapsulated may preferably be a TLV format.

In the embodiment, the step that the fragment ID is added in front of each fragment to form the digital sequence may include that: at least two digits are added in front of each fragment as the fragment ID to form the digital sequence, wherein a first digit in the at least two digits is used for identifying the wireless configuration parameter, and a second digit in the at least two digits is used for identifying a position of the fragment in the wireless configuration parameter.

The step that the wireless configuration parameter is coded into the digital sequence may include that: the wireless configuration parameter is encrypted, and the encrypted wireless configuration parameter is coded.

In the embodiment, the wireless configuration parameter may be encrypted by virtue of a key already known to the receiving party, and the data messages are sent to the receiving party; and the wireless configuration parameter may also be encrypted by a key generated by a sending party of the wireless configuration parameter, the data messages are sent to the receiving party, and the key generated by the sending party is sent to the receiving party in an asymmetric encryption manner. The encryption methods may be used independently, and may also be combined for use. By the encryption methods, wireless configuration parameter coding security is improved.

In the embodiment, the data messages may be periodically sent in a wireless broadcast manner or a wireless multicast manner, so that multiple terminals may be simultaneously configured.

In the embodiment, a method for receiving a wireless parameter is provided. Fig. 2 is a flowchart of a method for receiving a wireless parameter according to an embodiment of the present disclosure, and as shown in Fig. 2, the flow includes the following steps:
Step S202: data messages are received, and length sequences of the data messages are acquired, wherein the length sequences correspond to a digital sequence obtained by coding a wireless configuration parameter; and
Step S204: the length sequences are decoded to obtain the wireless configuration parameter, and configuration is performed according to the wireless configuration parameter.

By the steps, the length sequences, corresponding to the digital sequence obtained by coding the wireless configuration parameter, of the data messages are received, the length sequences of the data messages is decoded to obtain the wireless configuration parameter, and configuration is performed according to the wireless configuration parameter, so that a receiving party does not need additional hardware to input the wireless configuration parameter. In addition, the digital sequence is required to be decoded into the wireless configuration parameter, so that receiving security is improved. By virtue of the above technical solution, the problems of additional hardware requirement and low security of sending and receiving of the wireless configuration parameter in a WLAN are solved, hardware cost is reduced, and sending and receiving security is improved.

In the embodiment, the step that the length sequences of the data messages are acquired may include that: multiple fragments are obtained from the received data messages, and the multiple fragments are combined to obtain the digital sequence according to a fragment ID of each fragment in the multiple fragments.

In the embodiment, the fragment ID of each fragment may include at least two digits, wherein a first digit in the at least two digits is used for identifying the wireless configuration parameter, and a second digit in the at least two digits is used for identifying a position of the fragment in the wireless configuration parameter.

Under the condition that the coded wireless configuration parameter is encrypted, the step that the coded wireless configuration parameter is decoded to obtain the wireless configuration parameter may include that: the coded wireless configuration parameter is decoded to obtain an encrypted wireless configuration parameter, and the encrypted wireless configuration parameter is decrypted to obtain the wireless configuration parameter.

There may be multiple decryption manners for the coded wireless configuration parameter. For example, the encrypted wireless configuration parameter may be decrypted by virtue of an already known key; and a key generated by a sending party of the wireless configuration parameter may also be received, the key being sent in an asymmetric encryption manner, and the encrypted wireless configuration parameter is decrypted according to the key generated by the sending party. By the decryption manners, wireless parameter receiving security is improved.

In the embodiment, a device for sending a wireless parameter is further provided, which is configured to implement the abovementioned method, and that what has been described in the abovementioned embodiment and exemplary implementation modes will not be elaborated herein. It is important to note that names of components in the following device do not form practical limits to the components, and for example, a coding component may be described as "a component configured to code a wireless configuration parameter into a digital sequence". All of the following components may be implemented in a processor, and for example, the coding component may be described as "a processor, configured to code a wireless configuration parameter into a digital sequence", or, "a processor, including a coding component", and the like. Fig. 3 is a first structure diagram of a device for sending a wireless parameter according to an embodiment of the present disclosure, and as shown in Fig. 3, the device includes: a coding component 32 and a sending component 34. The device will be described below.

The coding component 32 is configured to code a wireless configuration parameter into a digital sequence, wherein the wireless configuration parameter is used for configuring a wireless parameter of a receiving party which receives the wireless configuration parameter.

The sending component 34 is configured to send data messages corresponding to the digital sequence, wherein length sequences of the data messages correspond to the digital sequence.

By the device, the wireless configuration parameter to be sent is coded into the digital sequence, and then data messages corresponding to the digital sequence are sent, wherein the length sequences of the data messages correspond to the digital sequence, so that the receiving party does not need additional hardware to input the wireless configuration parameter. In addition, the wireless configuration parameter is coded into the digital sequence, so that sending security is improved. By virtue of the above technical solution, the problems of additional hardware requirement and low security of sending and receiving of the wireless configuration parameter in a WLAN are solved, hardware cost is reduced, and sending and receiving security is improved.

In the embodiment, the coding component 32 may be configured to encapsulate the wireless configuration parameter into a TLV format, split data obtained by encapsulation into multiple fragments and add a fragment ID in front of each fragment, wherein the multiple fragments in combination form the digital sequence.

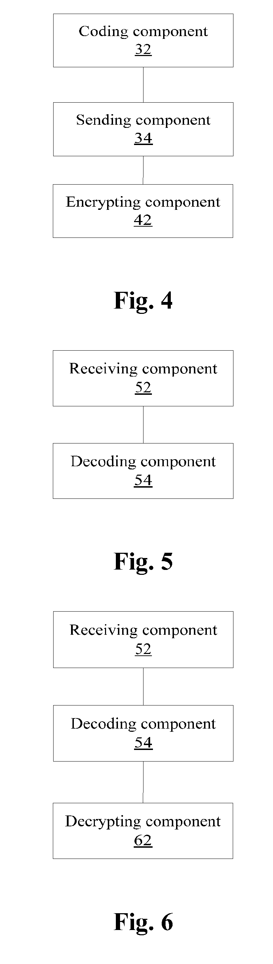

Fig. 4 is a second structure diagram of a device for sending a wireless parameter according to an embodiment of the present disclosure, and as shown in Fig. 4, the device may include: a coding component 32, a sending component 34 and an encrypting component 42. Functions of the coding component 32 and the sending component 34 are the same as those of the coding component 32 and sending component 34 in Fig. 3, and will not be described here. The device will be described below.

The encrypting component 42 may be configured to encrypt the wireless configuration parameter, and the coding component 32 may be configured to code the encrypted wireless configuration parameter.

In the embodiment, the encrypting component 42 may further be configured to encrypt the wireless configuration parameter by virtue of a key already known to the receiving party, the sending component 34 may further be configured to send the data messages to the receiving party, the encrypting component 42 may further be configured to encrypt the wireless configuration parameter by virtue of a key generated by a sending party of the wireless configuration parameter, and the sending component 34 may further be configured to send the data messages to the receiving party and send the key generated by the sending party to the receiving party in an asymmetric encryption manner.

In the embodiment, the sending component 34 may further be configured to periodically send the data messages in a wireless broadcast manner or a wireless multicast manner, so that multiple terminals may be simultaneously configured.

Fig. 5 is a first structure diagram of a device for receiving a wireless parameter according to an embodiment of the present disclosure, and as shown in Fig. 5, the device includes: a receiving component 52 and a decoding component 54. The device will be described below.

The receiving component 52 is configured to receive data messages; and
the decoding component 54 is configured to acquire length sequences of the data messages, the length sequences corresponding to a digital sequence obtained by coding a wireless configuration parameter, decode the length sequences to obtain the wireless configuration parameter and perform configuration according to the wireless configuration parameter.

By the device, the length sequences, corresponding to the digital sequence obtained by coding the wireless configuration parameter, of the data messages are received, the length sequences of the data messages is decoded to obtain the wireless configuration parameter, and configuration is performed according to the wireless configuration parameter, so that a receiving party does not need additional hardware to input the wireless configuration parameter. In addition, the digital sequence is required to be decoded into the wireless configuration parameter, so that receiving security is improved. By virtue of the above technical solution, the problems of additional hardware requirement and low security of sending and receiving of the wireless configuration parameter in a WLAN are solved, hardware cost is reduced, and sending and receiving security is improved.

The decoding component 54 may further be configured to obtain multiple fragments from the received data messages and combine the multiple fragments to obtain the digital sequence according to a fragment ID of each fragment in the multiple fragments.

Fig. 6 is a second structure diagram of a device for receiving a wireless parameter according to an embodiment of the present disclosure, and as shown in Fig. 6, the device includes: a receiving component 52, a decoding component 54 and a decrypting component 62. The device will be described below.

The decrypting component 62 is configured to decrypt the encrypted wireless configuration parameter to obtain the wireless configuration parameter, and the decoding component 54 is configured to decode the coded wireless configuration parameter to obtain the encrypted wireless configuration parameter.

In the embodiment, the decrypting component 62 may further be configured to decrypt the encrypted wireless configuration parameter by virtue of an already known key, the receiving component 52 may further be configured to receive a key generated by a sending party of the wireless configuration parameter, the key being sent in an asymmetric encryption manner, and the decrypting component 62 may be configured to decrypt the encrypted wireless configuration parameter by virtue of the key generated by the sending party.

The present disclosure will be described below with reference to exemplary embodiments and implementation modes.

### Exemplary embodiment 1

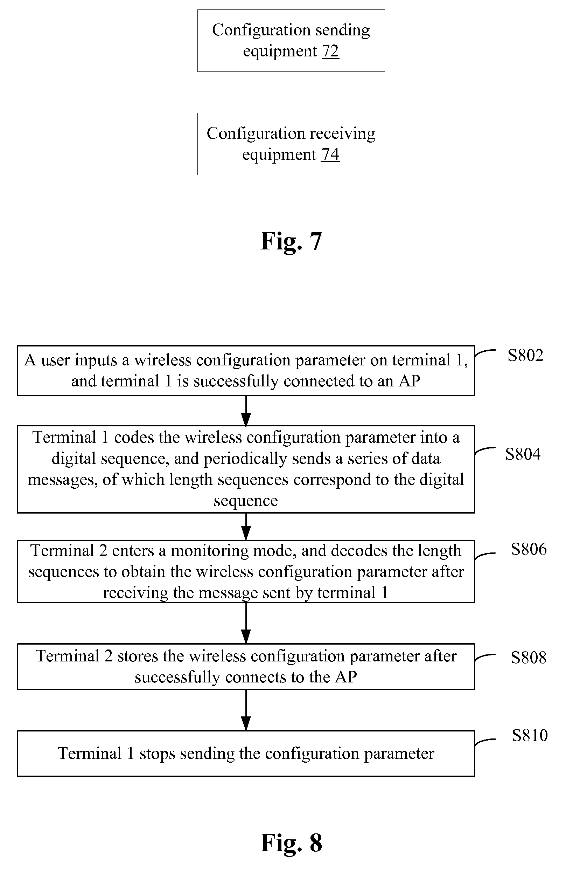

Fig. 7 is a structure diagram of a device for configuring a WLAN terminal according to exemplary embodiment 1, and as shown in Fig. 7, the device for configuring the WLAN terminal includes configuration sending equipment 72 and configuration receiving equipment 74, wherein functions and effects of the configuration sending equipment 72 are the same as those of the device for sending a wireless parameter in the abovementioned embodiment, and functions and effects of the configuration receiving equipment 74 are the same as those of the device for receiving a wireless parameter in the abovementioned embodiment. The device for configuring the WLAN terminal will be described below.

The configuration sending equipment 72 includes a wireless configuration parameter sending processing unit, which may usually be terminal equipment convenient for input and output operation of a user, such as a computer and a mobile phone, and may also be an AP.

The configuration receiving equipment 74 includes a wireless configuration parameter receiving processing unit, which may usually be terminal equipment inconvenient for input and output operation of the user, such as a wireless camera and an intelligent socket.

The processing units on the configuration sending equipment 72 and the configuration receiving equipment 74 may both be implemented by software without adding new hardware on the equipment.

The wireless configuration parameter sending processing unit on the configuration sending equipment 72 codes a wireless configuration parameter into a string of special digital sequence, and then periodically sends a series of special data messages, length sequences of the series of data messages corresponding to the special digital sequence.

The wireless configuration parameter receiving processing unit on the configuration receiving equipment 74 monitors all messages transmitted over the air, obtains the digital sequence from the length sequences of the messages after monitoring the messages sent by the configuration sending equipment, performs decoding to obtain the wireless configuration parameter, and connects to an AP.

In the exemplary embodiment, in order to improve security, the coding operation may include encryption operation, the decoding operation correspondingly includes decryption operation, and the digital sequence may be simultaneously decoded by multiple pieces of configuration receiving equipment so as to simultaneously configure multiple pieces of terminal equipment.

By the exemplary embodiment, the wireless configuration parameter is coded and converted into the length sequences of the messages, and is transmitted through a wireless channel, a connection is not required to be pre-established between the sending processing equipment and the receiving processing equipment, and multiple terminals may be simultaneously configured.

### Exemplary embodiment 2

In the following description, terminal 1 is configuration sending equipment of the embodiment of the present disclosure, such as an intelligent mobile phone; and terminal 2 is configuration receiving equipment of the embodiment of the present disclosure, such as a wireless camera. The exemplary embodiment describes a process of transmitting a wireless configuration parameter from terminal 1 to terminal 2. Fig. 8 is a flowchart of configuring a WLAN terminal according to exemplary embodiment 2, and as shown in Fig. 8, the flowchart includes the following steps:
Step S802: a user inputs a wireless configuration parameter on terminal 1, terminal 1 is connected to an AP, and its wireless network card is switched into a connected state;
Step S804: the user starts a wireless configuration parameter sending processing program on terminal 1, and the program codes the wireless configuration parameter into a digital sequence and then periodically sends a series of data messages, wherein length sequences of the series of messages correspond to the digital sequence, and the messages may be of any type, and the content is also insignificant;
Step S806: if there is no wireless configuration parameter stored or terminal 2 is failed to connect to the AP according to an original parameter after terminal 2 is started, terminal 2 automatically enters a monitoring mode, namely monitors all messages transmitted over the air, including messages of which destination addresses are not its own address, and if monitoring messages sent by terminal 1 and discovering that a length of the messages is consistent with a specific rule, stores length sequences of the messages and performs decoding to obtain the wireless configuration parameter through a wireless configuration parameter receiving processing program;
Step S808: after successfully connecting to the AP, terminal 2 stores the wireless configuration parameter to implement direct connection to the AP without executing a receiving configuration process after next starting, and at this moment, terminal 2 may further send a notification message to terminal 1; and
Step S810: terminal 1 stops sending the configuration parameter, wherein such operation may be triggered by multiple conditions, and for example, if a user indicates to stop, terminal 1 automatically stops after a certain period of time, and terminal 1 stops after receiving the notification message sent by terminal 2.

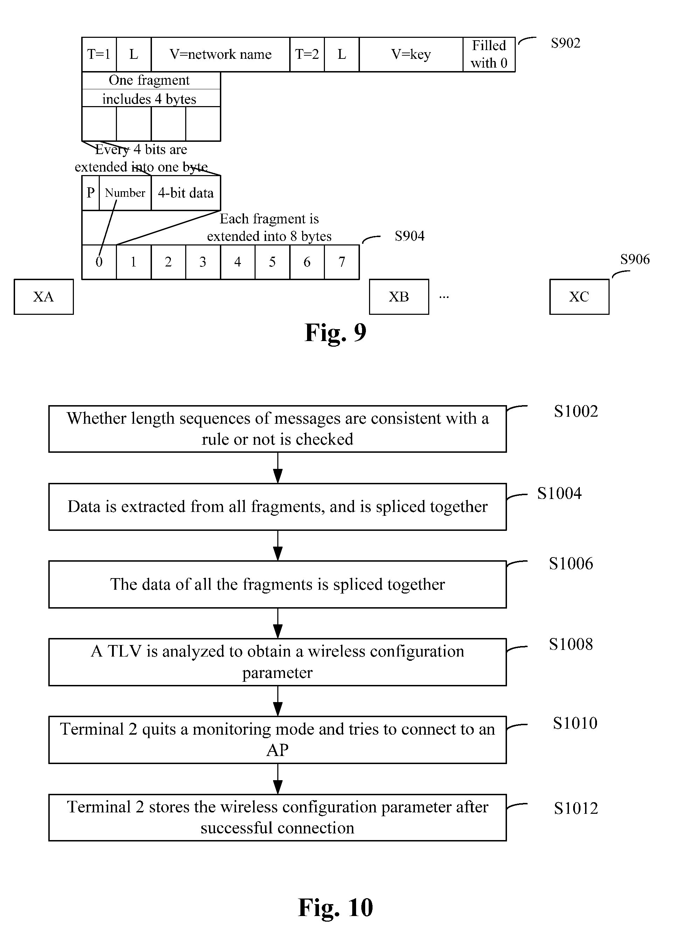

In the exemplary embodiment, coding and decoding algorithms may further be added. A checking and synchronization mechanism is adopted to prevent the conditions of packet loss, packet error and the like caused by high rate of influence of conflicts and interference on transmission of the wireless channel. Fig. 9 is a diagram of a coding algorithm according to exemplary embodiment 2.

Step S902: a configuration parameter such as a name and key of a wireless network is encapsulated into a TLV format, spliced and complemented into an integral multiple of 4 bytes with 0;

Step S904: obtained data is split into fragments with sizes of 4 bytes, each byte is further split into higher 4 bits and lower 4 bits, and every 4 bits of data are added with a 3-bit number and a parity checking bit to be extended to 1 byte, so that each fragment is extended into 8 bytes numbered from 0 to 7, and a value of each byte is ranged from 0 to 255; and

Step S906: two digits more than 256 are added in front of each fragment as a fragment ID, wherein the first digit is recorded as X, the second digit is determined according to a position of the fragment, the second digit of the first fragment is A, the second digit of the middle fragment is B, the second digit of the last fragment is C, and X, A, B and C are required to be different.

Fig. 10 is a flowchart of a decoding algorithm according to exemplary embodiment 2, and as shown in Fig. 10, the flowchart includes the following steps:
Step S1002: if X repeatedly appears in the length sequences of the messages, and is followed by A or B or C, it is determined that the sequence is consistent with the rule, and the next step of decoding operation will be performed;
Step S1004: each message length value after each fragment ID is analyzed, whether there is an error or not is judged by parity checking and judgment, whether there is loss or not is judged by number judgment, and correct values are stored at corresponding positions in the fragments;
Step S1006: if all the fragments are collected, the 4-byte data is extracted from each fragment, and then is spliced together;
Step S1008: the obtained data is analyzed to obtain the wireless configuration parameter according to the TLV format;
Step S1010: in case of successful analysis, terminal 2 quits the monitoring mode, and tries to connect to the AP by virtue of the obtained wireless configuration parameter; and
Step S1012: in case of success connection, terminal 2 stores the configuration parameter, otherwise reenters the monitoring mode and performs re-decoding.

It is important to note that the exemplary embodiment for coding and decoding is only one of coding and decoding algorithms, and practically used algorithms may also have various modifications and variations.

Efficiency of transmitting the wireless configuration parameter by the method will be analyzed below. According to the above descriptions in the exemplary embodiment, one fragment, i.e. 4-byte data, may be transmitted every time when 10 messages are sent. If messages are transmitted at a time interval of 10ms, 100 messages may be transmitted every second, and 40-byte data may be born. An ordinary WLAN has a name not exceeding 32 bytes and a key of 8~32 bytes, totally not exceeding 40~64 bytes, and even with other parameters and TLV encapsulation overhead, the total length may not exceed 80 bytes. The data may be completely sent within at most 2 seconds at a speed of 40 bytes/second. That is, terminal equipment may acquire a configuration within 2 seconds under an ideal condition. In an ordinary interference environment, even though an acquired digital sequence has an error or is incomplete because of packet error and packet loss and re-decoding is required, error and incomplete positions may be corrected and correctly decoded within dozens of seconds after multiple repetitions.

When messages are sent according to a period of 10ms, if an average length of the messages is 300 bytes, an occupied idle interface bandwidth is only 300*100*8=240kbps, and is not so high, so that terminal 1 may normally access the Internet at the same time of sending wireless configuration data, and efficiency of network traffic is improved.

### Exemplary embodiment 3

In the exemplary embodiment, all equipment within wireless coverage of terminal 1 may receive messages sent by terminal 1 and analyze a configuration parameter as long as they know a decoding algorithm because wireless transmission is open, and multiple pieces of equipment may be simultaneously configured in the exemplary embodiment. If an AP adopts a Wi-Fi Protected Access (WPA) or WPA2 encryption algorithm and adopts a stronger key, it is difficult to crack the key in a direct attacking manner, so that coding and decoding algorithms adopted for the method may be prevented from being cracked by a network loiterer and an attacker.

In order to improve security, it is necessary to encrypt a wireless configuration parameter, including the key, for sending. The key for encryption is provided by terminal 2, i.e. a receiving configuration terminal, in the exemplary embodiment. The key may be directly included in a label of terminal 2, or may be printed on the label in form of two-dimensional code, or another form. During operation, a user is require to input the key of terminal 2 when starting a wireless configuration parameter sending processing program on terminal 1, and the key may be input in a scanning manner if being a two-dimensional code.

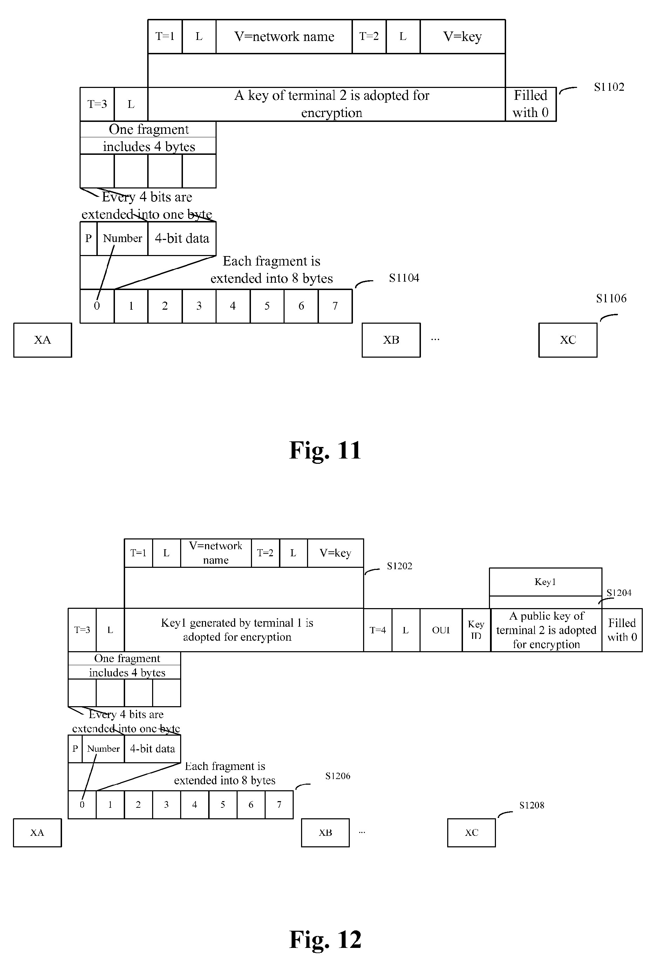

Fig. 11 is a diagram of encryption in the decoding algorithm according to exemplary embodiment 3. As shown in Fig. 11, Step S1102, Step S1104 and Step S1106 of the coding algorithm adopted in the exemplary embodiment are the same as Step S902, Step S904 and Step S906 in Fig. 9, the difference is that the coding algorithm includes an additional encryption step and adds a type of TLV configured to encapsulate the encrypted wireless network parameter. Correspondingly, the decoding algorithm also includes an additional decryption step, which will not be elaborated herein.

### Exemplary embodiment 4

By a coding algorithm adopted in exemplary embodiment 4, a wireless configuration parameter may be simultaneously transmitted to multiple terminals under an encryption condition. A key adopted for encrypting the wireless configuration parameter is generated by a sender, the encrypted key is transmitted to a receiver by adopting an asymmetric encryption method, and multiple terminals may be simultaneously configured in exemplary embodiment 4.

Fig. 12 is a diagram of encryption in the decoding algorithm according to exemplary embodiment 4, and as shown in Fig. 12, the diagram includes the following steps:
Step S1202: terminal 1 randomly generates a key, recorded as Key1, configured to encrypt a wireless network parameter, and a result is encapsulated into a TLV of type 3;
Step S1204: terminal 1 encrypts Key1 by virtue of an asymmetric encryption algorithm after acquiring a public key of terminal 2, and encapsulates a result into a TLV of type 4, wherein various methods for acquiring the public key may be adopted, for example, public keys of equipment of common types may be embedded into terminal 1 for a user to select; or, terminal 2 may include a link for downloading public keys in form of two-dimensional code, and terminal 1 scans the link to download the public key from the link; and
Step S1206 and Step S1208 are the same as Step S904 and Step S906 in exemplary embodiment 2, and will not be described here.

During decoding, terminal 2 decrypts the TLV of type 4 to obtain Key1 by virtue of own private key after obtaining the TLV, and then decrypts the TLV of type 3 to obtain the wireless configuration parameter by virtue of Key1 as the key.

It is important to note that the same manufacturer adopts the same pair of public and private keys for the same type of equipment rather than allocating different public and private keys to each piece of equipment. Therefore, if there exist multiple terminals of the same type, these terminals may decrypt the wireless configuration parameter.

If there exist terminals of different manufacturers or different types and they adopt different public and private pairs, it is only required to include multiple TLVs of type 4, wherein Key1 is encrypted by virtue of different public keys, the TLVs include Organizationally Unique Identifier and Key ID values configured to indicate which public keys of which manufacturers are used. During decryption, each terminal is only required to find its corresponding TLV.

### Exemplary embodiment 5

Configuration sending equipment may also adopt an AP. An operating flow is the same as that in exemplary embodiment 2, that is, the conditions that terminal equipment is used as the configuration sending equipment are substantially consistent.

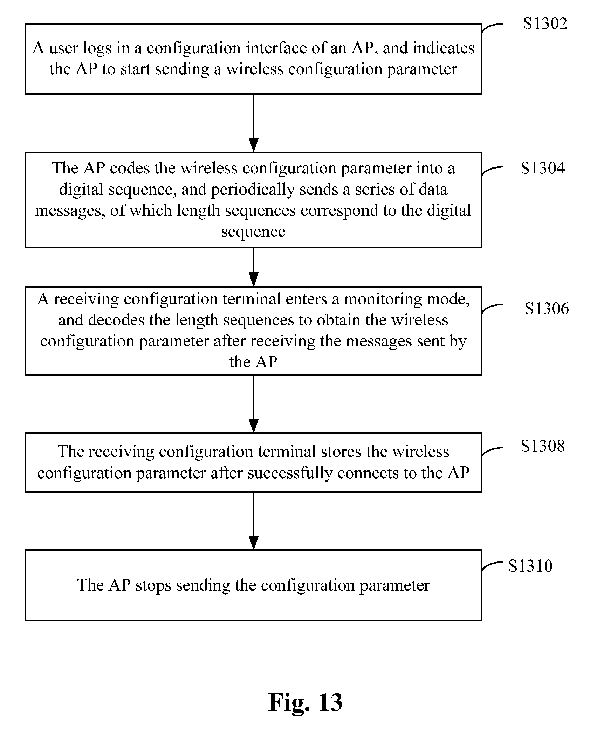

Fig. 13 is a flowchart of configuration of a wireless parameter of an AP according to exemplary embodiment 5, and as shown in Fig. 13, the flowchart includes the following steps:
Step S1302: a user logs in a configuration interface of an AP, and indicates the AP to start sending a wireless configuration parameter;
Step S1304: the AP codes the wireless configuration parameter into a digital sequence, and periodically sends a series of data messages, of which length sequences correspond to the digital sequence;
Step S1306: a receiving configuration terminal enters a monitoring mode, and decodes the length sequences to obtain the wireless configuration parameter after receiving the messages sent by the AP;
Step S1308: the receiving configuration terminal stores the wireless configuration parameter after successfully connects to the AP; and
Step S1310: the AP stops sending the configuration parameter.
By the steps, the user indicates the AP to start sending the wireless configuration parameter by logging in the configuration interface (which may usually be the web) or pressing a certain key on the AP.

The configuration parameter encryption methods described in exemplary embodiments 3 and 4 are also applicable to the condition that the AP is used as the configuration sending equipment.

### Industrial Applicability

According to the embodiment of the present disclosure, the wireless configuration parameter is coded into the digital sequence, wherein the wireless configuration parameter is used for configuring a wireless parameter of the receiving party which receives the wireless configuration parameter, and the data messages corresponding to the digital sequence are sent, wherein length sequences of the data messages correspond to the digital sequence, so that the problems of additional hardware requirement and low security of sending and receiving of the wireless configuration parameter in the WLAN are solved, hardware cost is reduced, and sending and receiving security is improved.

Obviously, those skilled in the art should know that each component or step of the present disclosure may be implemented by a universal computing device, and the components or steps may be concentrated on a single computing device or distributed on a network formed by a plurality of computing devices, and may optionally be implemented by programmable codes executable for the computing devices, so that the components or steps may be stored in a storage device for execution with the computing devices, or may form each integrated circuit component respectively, or multiple components or steps therein may form a single integrated circuit component for implementation. As a consequence, the present disclosure is not limited to any specific hardware and software combination.

The above is only the exemplary embodiment of the present disclosure and not intended to limit the present disclosure, and for those skilled in the art, the present disclosure may have various modifications and variations. Any modifications, equivalent replacements, improvements and the like within the principle of the present disclosure shall fall within the scope of protection of the present disclosure.

## Claims

1. A method for sending a wireless parameter, comprising:
coding a wireless configuration parameter into a digital sequence, wherein the wireless configuration parameter is used for configuring a wireless parameter of a receiving party which receives the wireless configuration parameter; and
sending data messages corresponding to the digital sequence, wherein length sequences of the data messages correspond to the digital sequence.

2. The method as claimed in claim 1, wherein coding the wireless configuration parameter into the digital sequence comprises:
encapsulating the wireless configuration parameter into a preset format;
splitting data obtained by encapsulation into multiple fragments; and
adding a fragment Identifier, ID, in front of each fragment, wherein the multiple fragments in combination form the digital sequence.

3. The method as claimed in claim 2, wherein the preset format comprises: a Type Length Value, TLV, format.

4. The method as claimed in claim 2, wherein adding the fragment ID in front of each fragment to form the digital sequence comprises:
adding at least two digits in front of each fragment as the fragment ID to form the digital sequence, wherein a first digit in the at least two digits is used for identifying an initial position of the fragment, and a second digit in the at least two digits is used for identifying a position of the fragment in the wireless configuration parameter.

5. The method as claimed in any one of claims 1 to 4, wherein coding the wireless configuration parameter into the digital sequence comprises:
encrypting the wireless configuration parameter; and
coding the encrypted wireless configuration parameter.

6. The method as claimed in claim 5, wherein
encrypting the wireless configuration parameter comprises: encrypting the wireless configuration parameter by virtue of a key already known to the receiving party; sending the data messages corresponding to the digital sequence comprises:
sending the data messages to the receiving party; and/or,
encrypting the wireless configuration parameter comprises: encrypting the wireless configuration parameter by virtue of a key generated by a sending party of the wireless configuration parameter; and sending the data messages corresponding to the digital sequence comprises: sending the data messages to the receiving party, and sending the key generated by the sending party to the receiving party in an asymmetric encryption manner.

7. The method as claimed in any one of claims 1 to 6, wherein sending the data messages corresponding to the digital sequence comprises:
periodically sending the data messages in a wireless broadcast manner or a wireless multicast manner.

8. A method for receiving a wireless parameter, comprising:
receiving data messages, and acquiring length sequences of the data messages, wherein the length sequences correspond to a digital sequence obtained by coding a wireless configuration parameter; and
decoding the length sequences to obtain the wireless configuration parameter, and performing configuration according to the wireless configuration parameter.

9. The method as claimed in claim 8, wherein acquiring the length sequences of the data messages comprises:
obtaining multiple fragments from the received data messages, and combining the multiple fragments to obtain the digital sequence according to a fragment ID of each fragment in the multiple fragments.

10. The method as claimed in claim 9, wherein the fragment ID of each fragment comprises at least two digits, wherein a first digit in the at least two digits is used for identifying an initial position of the fragment, and a second digit in the at least two digits is used for identifying a position of the fragment in the wireless configuration parameter.

11. The method as claimed in any one of claims 8 to 10, wherein decoding the coded wireless configuration parameter to obtain the wireless configuration parameter comprises:
decoding the coded wireless configuration parameter to obtain an encrypted wireless configuration parameter; and
decrypting the encrypted wireless configuration parameter to obtain the wireless configuration parameter.

12. The method as claimed in claim 11, wherein
decrypting the encrypted wireless configuration parameter comprises: decrypting the encrypted wireless configuration parameter by virtue of an already known key; and/or,
decrypting the encrypted wireless configuration parameter comprises: receiving a key generated by a sending party of the wireless configuration parameter, wherein the key is sent in an asymmetric encryption manner; and decrypting the encrypted wireless configuration parameter by virtue of the key generated by the sending party.

13. A device for sending a wireless parameter, comprising:
a coding component, configured to code a wireless configuration parameter into a digital sequence, wherein the wireless configuration parameter is used for configuring a wireless parameter of a receiving party which receives the wireless configuration parameter; and
a sending component, configured to send data messages corresponding to the digital sequence, wherein length sequences of the data messages correspond to the digital sequence.

14. The device as claimed in claim 13, wherein the coding component is configured to encapsulate the wireless configuration parameter into a preset format, split data obtained by encapsulation into multiple fragments and add a fragment Identifier, ID, in front of each fragment, wherein the multiple fragments in combination form the digital sequence.

15. The device as claimed in claim 14, wherein the preset format comprises: a Type Length Value, TLV, format.

16. The device as claimed in claim 14, wherein the coding component is configured to add the fragment ID in front of each fragment in a following manner to form the digital sequence:
adding at least two digits in front of each fragment as the fragment ID to form the digital sequence, wherein a first digit in the at least two digits is used for identifying an initial position of the fragment, and a second digit in the at least two digits is used for identifying a position of the fragment in the wireless configuration parameter.

17. The device as claimed in any one of claims 13 to 16, comprising: an encrypting component, configured to encrypt the wireless configuration parameter, wherein the coding component is configured to code the encrypted wireless configuration parameter.

18. The device as claimed in claim 17, wherein
the encrypting component is configured to encrypt the wireless configuration parameter by virtue of a key already known to the receiving party;
the sending component is configured to send the data messages to the receiving party;
the encrypting component is configured to encrypt the wireless configuration parameter by virtue of a key generated by a sending party of the wireless configuration parameter; and
the sending component is configured to send the data messages to the receiving party and send the key generated by the sending party to the receiving party in an asymmetric encryption manner.

19. The device as claimed in any one of claims 13 to 18, wherein the sending component is configured to periodically send the data messages in a wireless broadcast manner or a wireless multicast manner.

20. A device for receiving a wireless parameter, comprising:
a receiving component, configured to receive data messages; and
a decoding component, configured to acquire length sequences of the data messages, the length sequences corresponding to a digital sequence obtained by coding a wireless configuration parameter, decode the length sequences to obtain the wireless configuration parameter and perform configuration according to the wireless configuration parameter.

21. The device as claimed in claim 20, wherein the decoding component is configured to obtain multiple fragments from the received data messages and combine the multiple fragments to obtain the digital sequence according to a fragment ID of each fragment in the multiple fragments.

22. The device as claimed in claim 21, wherein the fragment ID of each fragment comprises at least two digits, wherein a first digit in the at least two digits is used for identifying an initial position of the fragment, and a second digit in the at least two digits is used for identifying a position of the fragment in the wireless configuration parameter.

23. The device as claimed in any one of claims 20 to 22, comprising:
a decrypting component, configured to decrypt the encrypted wireless configuration parameter to obtain the wireless configuration parameter, wherein the decoding component is configured to decode the coded wireless configuration parameter to obtain the encrypted wireless configuration parameter.

24. The device as claimed in claim 23, wherein
the decrypting component is configured to decrypt the encrypted wireless configuration parameter by virtue of an already known key;
the receiving component is configured to receive a key generated by a sending party of the wireless configuration parameter, wherein the key is sent in an asymmetric encryption manner; and
the decrypting component is configured to decrypt the encrypted wireless configuration parameter by virtue of the key generated by the sending party.
